# EUROPÄISCHE PATENTSCHRIFT

(11) **EP 0 304 129 B1**
(45) Veröffentlichungstag und Bekanntmachung des Hinweises auf die Patenterteilung: **26.05.1993**
(21) Anmeldenummer: 88201746.0
(22) Anmeldetag: 16.08.1988
(51) Int. Cl.: H04N 7/08

(54) **Verfahren und Anordnung zum Aufbereiten eines Kennsignals**
Method and device for processing an identifying signal
Méthode et dispositif de traitement d'un signal d'identification

(30) Priorität: 20.08.1987 DE 3727756
(43) Veröffentlichungstag der Anmeldung: 22.02.1989
(73) Patentinhaber: Philips Patentverwaltung GmbH, 22335 Hamburg (DE); Philips Electronics N.V., 5621 BA Eindhoven (NL)
(72) Erfinder: Bensch, Uwe, D-2000 Hamburg 54 (DE); von Vignau, Ralph, D-2000 Hamburg 53 (DE); Wille, Thomas, D-2000 Hamburg 56 (DE)
(74) Vertreter: Peters, Carl Heinrich, Dipl.-Ing.

(56) Entgegenhaltungen:
- DE-A- 3 012 429
- DE-C- 3 634 757
- US-A- 4 337 485

## Beschreibung

Die Erfindung bezieht sich auf ein Verfahren zum Aufbereiten von Kennsignalen, die in einem innerhalb eines Fernsehsignals zyklisch wiederholten Datensignal in Form eines Videotextsignals enthalten sind, welches wiedergabeseitig in Form einzelner stehender Fernsehbilder als Videotextseiten darstellbar ist, sowie auf eine Anordnung zur Durchführung des Verfahrens.

Das innerhalb eines Fernsehsignals zyklisch wiederholte, in den sogenannten Datenzeilen des Fernsehsignals übertragene und als Videotextsignal - in manchen Ländern Teletextsignal - bezeichnete Datensignal bildet ein System von Videotextseiten, die unterschiedliche Informationen enthalten. Dabei sind einige der Videotextseiten als Übersichtsseiten oder sogenannte Indexseiten ausgeführt, die zumindest im wesentlichen Inhaltsangaben und Hinweise zu anderen Videotextseiten enthalten, auf denen sich dann beispielsweise detaillierte Nachrichten und andere Informationen befinden. Die Indexseiten dienen zur Führung des Benutzers, der sich die darauf angegebenen Seitennummern mit Hilfe einer Nummerntastatur zur Darstellung auf einer Bildwiedergabeanordnung aufrufen kann. Bei einer größeren Datenfülle, die zu einer stärkeren Aufgliederung der darzustellenden Daten auf unterschiedliche Videotextseiten führt, müssen oft mehrere Indexseiten über die Nummerntastatur angewählt werden, bis die einzelne ausgewählte Information auf der Bildwiedergabeanordnung dargestellt wird. Die Nummerneingabe für dieses sogenannte Blättern in den Videotextseiten erfordert insbesondere bei stark aufgegliederten Informationen ein hohes Maß an Konzentration beim Benutzer, da jeder Eingabefehler auf eine falsche Videotextseite führt und somit in der Regel einen Rücksprung auf die Indexseiten und ein erneutes Anwählen verursacht.

Aus der DE-A-30 12 429 ist ein Verfahren zur Verringerung der Wartezeiten bei der Anzeige von Text- und Graphikseiten, die bei einem Informationssystem von einem Sender über einen Datenkanal zu mindestens einem Empfänger übertragen werden, bekannt, bei dem außer der dargestellten Seite auch benachbarte Seiten gespeichert werden. Bei diesem Verfahren wird beim Sender zu wenigstens einem Teil der zu übertragenden Text- oder Graphikseiten Zusatzinformation mit Hinweisen auf weitere inhaltlich zugeordnete Seiten hinzugefügt. Beim Empfänger wird jeweils eine Seite auf einem Sichtgerät dargestellt und werden die in der Zusatzinformation dieser Seite bezeichneten weiteren Seiten gespeichert.

Auch aus der US-A-4 337 485 ist ein Videotextsystem bekannt, bei dem in einer Zusatzzeile des Fernsehsignals, die außerhalb der auf einem Bildschirm dargestellten Zeilen liegt und die nicht mit irgendeiner besonderen Seite des periodisch übertragenen Videotextsignals im Zusammenhang steht, eine verschlüsselte Information enthalten ist, die zumindest eine Seite des Videotextsignals identifiziert.

Bei den aus dem Stand der Technik bekannten Verfahren ist es somit erforderlich, das Videotextsignal bereits senderseitig zu beeinflussen. Dies ist aus mehreren Gründen nachteilig und unerwünscht.

Die Erfindung hat die Aufgabe, ein Verfahren zu schaffen, durch welches die Nummerneingabe per Hand zum Anwählen der Videotextseiten überflüssig wird und welches eine senderseitige Abwandlung des Videotextsignals nicht erforderlich macht.

Die Aufgabe wird erfindungsgemäß dadurch gelöst, daß wiedergabeseitig ein wenigstens einen Teil des Inhalts einer ausgewählten Videotextseite bildender Abschnitt des Videotextsignals auf dreistellige, natürliche Zahlen darstellende Signalfolgen abgesucht wird, diese als Kennsignale abgetrennt und als zur ausgewählten Videotextseite zugeordnet abgespeichert werden.

Gemäß einer Norm für das Videotextsignal werden die Seitennummern aller Videotextseiten durch dreistellige, natürliche Zahlen gebildet. Der Erfindung liegt die Erkenntnis zugrunde, daß derartige Zahlen im Inhalt der Videotextseiten zu anderen Zwecken als für die Angabe von Seitennummern nicht oder nur in ganz seltenen Ausnahmefällen verwendet werden. So werden beispielsweise Uhrzeiten von Fernsehprogramm-Vorschautafeln oder Temperatur-und Luftdruckangaben von Wetterberichts-Tafeln im anderen Format wiedergegeben. Wenn somit im Inhalt einer Videotextseite eine dreistellige, natürliche Zahl auftritt, besteht eine hohe Wahrscheinlichkeit dafür, daß es sich um die Angabe einer Seitennummer innerhalb eines Hinweises auf eine Videotextseite handelt.

Das erfindungsgemäße Verfahren trennt somit aus dem Inhalt einer ausgewählten Videotextseite Signalfolgen ab, die mit hoher Wahrscheinlichkeit eine Seitennummer darstellen. Diese Signalfolgen werden zugeordnet zu der Seitennummer der ausgewählten Videotextseite, aus der sie abgetrennt wurden, gespeichert. Sie können dann unmittelbar oder zu einem späteren Zeitpunkt zum Steuern des sogenannten Blätterns in den Videotextseiten herangezogen werden. Wenn der Benutzer unter Anwendung des erfindungsgemäßen Verfahrens eine Videotextseite zur Darstellung auf der Bildwiedergabeanordnung anwählen will, auf die er in der zuvor angewählten Videotextseite hingewiesen worden ist, braucht er die neue Seitennummer nicht mehr gesondert über die Nummerntastatur einzugeben, da sie aus der dargestellten Seite bereits herausgesucht und für einen vereinfachten Aufruf dieser Videotextseite verfügbar abgespeichert ist. Die Abspeicherung ermöglicht darüber hinaus auch eine sofortige Verfügbarkeit einer einmal gefundenen Seitennummer auch bei späterem, erneutem Anwählen der Videotextseite, zu der zugeordnet sie abgespeichert wurde. Damit wird insbesondere ein Rückblättern über die Übersichtsseiten zum Auswählen weiterer Seiten mit Einzelinformationen vereinfacht und beschleunigt.

Um ein möglichst einfaches und schnelles Auffinden der abzutrennenden Kennsignale zu erreichen, wird vorteilhaft der Inhalt der ausgewählten Videotextseite zeichenweise danach abgesucht, ob eine eine Ziffer darstellende Signalfolge vorliegt, und wird eine Signalfolge als Kennsignal abgetrennt, wenn sie unmittelbar aufeinanderfolgend drei eine Ziffer darstellende Signalfolgen umfaßt und die unmittelbar voraufgehenden und sich anschließenden Signalfolgen keine Ziffer darstellen. Bei diesem Verfahren wird der Inhalt der Videotextseite zunächst nur daraufhin untersucht, ob darin überhaupt eine Ziffer enthalten ist. Dieser Vorgehensweise liegt die Erkenntnis zugrunde, daß der überwiegende Teil des Inhalts einer durchschnittlichen Videotextseite aus Zeichen besteht, die keine Ziffern darstellen. Damit wird im Inhalt der Videotextseite eine Vorauswahl durchgeführt. Hat diese das Vorliegen einer eine Ziffer darstellenden Signalfolge ergeben, wird anschließend geprüft, ob diese Signalfolge Teil einer eine dreistellige, natürliche Zahl darstellenden Signalfolge ist. Um sicherzustellen, daß dabei nicht auch Teile von Signalfolgen, die vier- oder mehrstellige Zahlen darstellen, als abzutrennende Kennsignale identifiziert werden, umfaßt diese Prüfung auch die der als Kennsignal identifizierten Signalfolge unmittelbar voraufgehenden und sich anschließenden Signale. Diese dürfen bei einer korrekten Identifizierung keine Ziffern darstellen. Vorteilhaft wird diese Prüfung auf das sich der als Kennsignal abzutrennenden Signalfolge anschließende Zeichen beschränkt, da durch die vorab erfolgte Suche nach einzelnen Ziffern bereits klargestellt ist, daß die dem Kennsignal voraufgehende Signalfolge keine Ziffer darstellt.

Nach einer vorteilhaften Weiterbildung der Erfindung werden als Kennsignale nur Signalfolgen abgespeichert, die eine natürliche Zahl im Wertebereich von 100 bis 899 darstellen. Durch dieses zusätzliche Auswahlkriterium wird eine weitere Erhöhung der Wahrscheinlichkeit erreicht, mit einer als Kennsignal identifizierten Signalfolge tatsächlich eine Videotext-Seitennummer identifiziert zu haben. Es wird dabei von der Vereinbarung Gebrauch gemacht, Videotextseiten nur mit den genannten Seitennummern zu kennzeichnen.

Unter Ausnutzung des vorgenannten Wertebereiches für die Videotext-Seitennummern wird eine besonders effektive Suche dadurch erreicht, daß der Inhalt der ausgewählten Videotextseite zeichenweise auf Signalfolgen abgesucht wird, die eine Ziffer im Wertebereich von 1 bis 8 darstellen, und daß bei Auffinden einer solchen Signalfolge die unmittelbar anschließenden Signalfolgen darauf geprüft werden, ob sie zwei Ziffern im Wertebereich von 0 bis 9, gefolgt von einem anderen Zeichen, darstellen. Dies stellt eine verbesserte Ausgestaltung des vorstehend beschriebenen Verfahrens dar.

Darüber hinaus sind auch weitere Abwandlungen des Verfahrens möglich. So kann beispielsweise der Inhalt der Videotextseite Zeichen für Zeichen daraufhin überprüft werden, ob eine die jeweils drei folgenden Zeichen darstellende Signalfolge eine dreistellige, natürliche Zahl im erwähnten Wertebereich bildet. Ein solches Verfahren könnte von Vorteil sein, wenn der Inhalt der ausgewählten Videotextseite überwiegend oder fast ausschließlich aus Zahlen besteht.

Das erfindungsgemäße Verfahren kann außerdem vorteilhaft dazu verwendet werden, bei Auftreten einer vorbestimmten Signalfolge im Anschluß an ein Kennsignal einen bestimmten, sich an die vorbestimmte Signalfolge anschließenden Abschnitt von Signalen weiteren Untersuchungsschritten zuzuleiten. Dies gestattet eine einfache Erweiterung des Verfahrens beispielsweise auf Videotextseiten-Unteradressierungen. Diese werden bereits als vierstellige sogenannte Tafelnummern zu einigen Videotextseiten ausgesendet, deren Inhalt den Rahmen des Bildschirms der Bildwiedergabeanordnung sprengt. Die einzelne, ausgewählte Videotextseite wird dann in mehreren Schritten nacheinander, d.h. in mehreren aufeinanderfolgenden sogenannten Tafeln, auf der Bildwiedergabeanordnung dargestellt. Die Tafelnummern bilden im Videotextsignal einen Abschnitt von Signalen, der an ein Kennsignal, d.h. eine Videotext-Seitennummer, unter Einfügen einer vorbestimmten Signalfolge angeschlossen ist. Diese vorbestimmte Signalfolge wird auch als "Trennsignal" oder "Delimiter" bezeichnet und stellt vorzugsweise einen Schrägstrich oder ein Komma dar. Wird nun beispielsweise eine solche Signalfolge im Anschluß an ein Kennsignal identifiziert, kann der sich anschließende Abschnitt von Signalen entsprechend dem die Seitennummer darstellenden Kennsignal zum Aufrufen der einzelnen Tafeln abgespeichert werden.

Zu einer vereinfachten Handhabung beim Blättern zwischen einzelnen Videotextseiten wird das erfindungsgemäße Verfahren insbesondere dadurch anwendbar, daß bei wiedergabeseitigem Auswählen einer Videotextseite zur Darstellung auf einer Bildwiedergabeanordnung alle Kennsignale mit zugehörigen Positionen auf der Videotextseite abgespeichert werden und eine Markierung auf der Bildwiedergabeanordnung dargestellt wird, die gemäß den abgespeicherten Positionen den einzelnen durch die Kennsignale dargestellten Zahlen wahlweise zuordbar ist. Mit einer derartigen Markierung kann jede auf der Videotextseite dargestellte Seitennummer einfach und überschaubar hervorgehoben werden. Dies erhöht die Übersichtlichkeit der Videotextseite für den Benutzer und läßt sich von ihm als eine Art Lesezeichen verwenden. Er wird damit unmittelbar auf die Videotext-Seitennummern hingeführt, die ihm aufgrund der Hinweise im Inhalt der Videotextseite zum Auswählen angeboten werden. Durch die Zuordnung der Markierung zu den einzelnen abgespeicherten Kennsignalen wird dabei gleichzeitig das Auswählen vorbereitet derart, daß der Benutzer das Auswählen mit der der Markierung zugeordneten Seitennummer durch eine vereinfachte Bedienungshandlung, vorzugsweise einen einzigen Tastendruck, sofort einleiten kann. Es wird dadurch möglich, das Anwählen gewünschter Videotextseiten in einer einfachen, gegen Bedienungsfehler sicheren Weise vorzunehmen.

Zur Vereinfachung der Bedienung ist es dabei von Vorteil, nach dem Auswählen einer Videotextseite daraus in einem ersten Schritt alle als Kennsignale identifizierten Signalfolgen in der Reihenfolge ihres Auftretens im Inhalt der Videotextseite abzuspeichern. Im nächsten Schritt wird die Markierung dem ersten zu der Videotextseite abgespeicherten Kennsignal zugeordnet, sie erscheint entsprechend auf der Bildwiedergabeanordnung. Beispielsweise durch einfache Sprungbefehle ist die Markierung im weiteren schrittweise den übrigen Kennsignalen zuordbar. Für den Benutzer stellt sich dieses Verfahren so dar, daß nach Auswählen der Videotextseite die Markierung automatisch auf der ersten als Seitennummer erkannten Zahl stehen bleibt und durch Knopfdruck jeweils zur nächsten als Seitennummer erkannten Zahl weiterspringt. Durch die schon beschriebene Bedienung kann die zur gerade markierten Seitennummer gehörende Videotextseite ausgewählt und anstelle der Videotextseite dargestellt werden, in der der Benutzer die Seitennummer nachgeschlagen hat.

Bei einem solchen Verfahren bewirken auch Fehlerkennungen von Seitennummern nur geringfügige Störungen. Wenn beispielsweise im Inhalt einer ausgewählten Videotextseite eine dreistellige, natürliche Zahl enthalten ist, die keine Seitennummer darstellt, wird dies beim Verschieben der Markierung durch den Benutzer ohne weiteres erkannt. Er kann dann in solchen vereinzelten Fällen die Markierung weiterschieben, ohne auf die fälschlich als Kennsignal und damit als Seitennummer abgespeicherte Zahl zurückzugreifen.

Das erfindungsgemäße Verfahren kann auch dahingehend ausgestaltet sein, daß bei wiedergabeseitigem Auswählen einer Videotextseite zur Darstellung auf einer Bildwiedergabeanordnung das Absuchen nach Auffinden jeweils eines Kennsignals unterbrochen und eine Markierung zugeordnet zu der durch das Kennsignal dargestellten Zahl auf der Bildwiedergabeanordnung dargestellt wird. Dadurch wird das vollständige Absuchen des Inhalts der gerade neu ausgewählten Videotextseite vermieden und nur jeweils bis zur nächsten als Kennsignal erkannten Signalfolge gesucht. Die Zeitspanne zwischen dem Auswählen einer Videotextseite und dem Erscheinen der Markierung auf der ersten dargestellten Seitennummer kann somit verkürzt werden. Dabei können jedoch die aufgefundenen Kennsignale und ihre Position auf der Videotextseite zugeordnet zu dieser abgespeichert werden, so daß ein Rückspringen auf bereits gefundene Kennsignale beschleunigt wird.

Wenn beim erfindungsgemäßen Verfahren vorteilhaft wenigstens ein abgespeichertes Kennsignal als Adresse zum Auswählen einer (weiteren) Videotextseite aufgerufen wird, kann dies außer nach gezielter Bedienung durch den Benutzer auch selbsttätig in der Weise erfolgen, daß das Auswählen nach den abgespeicherten Kennsignalen bereits unmittelbar nach dem Suchen und Abspeichern der Kennsignale ohne zusätzliche Bedienungshandlung des Benutzers eingeleitet wird. Vorzugsweise wird dazu nach Auswählen einer Videotextseite deren Inhalt auf Kennsignale darstellende Signalfolgen abgesucht. Identifizierte Kennsignale werden in der Reihenfolge ihres Auffindens in der beschriebenen Weise abgespeichert. Ist der gesamte Inhalt der ausgewählten und im Augenblick dargestellten Videotextseite durchsucht, wird in einem nächsten vom Benutzer nicht beeinflußten und für ihn auch nicht sichtbaren Schritt ein abgespeichertes Kennsignal nach dem anderen zum Auswählen der Videotextseite mit der durch das Kennsignal dargestellten Seitennummer herangezogen, die Videotextseite aus dem Videotextsignal in beschriebener Weise entnommen und "auf Vorrat" in einem Speicher abgelegt.

Während dieser Zeit kann der Benutzer aus den Videotextseiten, auf die er im Inhalt der ihm dargestellten Videotextseite hingewiesen wird, mit Hilfe der verschiebbaren Markierung eine gewünschte Seite auswählen. Wenn diese durch das automatisch ablaufende Auswählen bereits dem Datensignal entnommen und im Speicher abgelegt ist, kann sie ohne weitere Verzögerungen auf der Bildwiedergabeanordnung dargestellt werden. Ist sie dagegen durch das automatische Auswählen noch nicht aufgefunden worden, hat der Benutzer trotzdem den Vorteil, daß sich die Wartezeit bis zur Darstellung dieser Seite für ihn auf die restliche Zeitspanne des automatischen Auswählens verkürzt. Auf diese Weise kann das Blättern in den Videotextseiten beschleunigt werden.

Eine Abwandlung der beschriebenen Verfahren für das Auswählen von im Inhalt einer dargestellten Videotextseite bereits erkannten Seitennummern kann dadurch vorgenommen werden, daß zugeordnet zu der Videotext-Seitennummer nur die Positionen der im Inhalt dieser Videotextseite enthaltenen, Seitennummern darstellenden Kennsignale abgespeichert werden. Damit ist es ebenfalls möglich, ohne weiteren Suchvorgang die Markierung auf die dargestellten Seitennummern einzustellen. Soll die zugehörige Videotextseite als nächste Seite ausgewählt werden, kann die der Markierung gerade zugeordnete Seitennummer aus dem Inhalt der Videotextseite gelesen und wie beschrieben verwendet werden. Dadurch werden Speicherplätze eingespart.

Nach einer vorteilhaften Weiterbildung des erfindungsgemäßen Verfahrens wird beim Überschreiten einer vorgebbaren Mindestzahl von Kennsignalen in einer Videotextseite zu dieser eine Kennung abgespeichert, die einem vereinfachten Auswählen dieser Videotextseite dient. Dieser Weiterbildung liegt die Erkenntnis zugrunde, daß im Inhalt der Übersichts- oder Indexseiten in der Regel eine hohe Anzahl von Seitennummern enthalten ist, während der Inhalt der Einzelinformationen umfassenden Videotextseiten in der Regel nur sehr wenige oder gar keine Seitennummern umfaßt. Durch die Kennung wird eine Indexseite automatisch als solche gekennzeichnet, um ihr Wiederauffinden beim Blättern zu erleichtern. Erfahrungsgemäß ist nämlich die Wahrscheinlichkeit für einen Rückgriff auf diese Seiten besonders hoch. Das Auffinden der als Indexseiten gekennzeichneten Videotextseiten wird für den Benutzer vorzugsweise dadurch erleichtert, daß die abgespeicherten Kennungen auf der Bildwiedergabeanordnung dargestellt werden. Insbesondere kann diese Darstellung als während des gesamten Blätterns unveränderte, d.h. vom Inhalt der gerade ausgewählten Videotextseite unabhängige Anzeige auf der Bildwiedergabeanordnung erfolgen. Der Benutzer erhält somit ein bleibendes Verzeichnis der erkannten Indexseiten und kann auf dieses vorzugsweise durch Verschieben der Markierung, aber auch in der bisher üblichen Weise durch Tasteneingabe der angezeigten Seitennummer, beliebig zurückgreifen.

Entsprechend kann das Abspeichern der vorgenannten Kennung davon abhängig gemacht werden, ob die Anzahl der Kennsignale in der Videotextseite eine Höchstzahl nicht überschreitet. Dem liegt die Erkenntnis zugrunde, daß die Anzahl der Seitennummern in einer Indexseite mit üblichem Aufbau begrenzt ist. Wird dagegen in einer Videotextseite eine über dieses übliche Maß hinausgehende Anzahl von dreistelligen, natürlichen Zahlen erkannt, spricht eine hohe Wahrscheinlichkeit dafür, daß es sich bei dieser Videotextseite nicht um eine Indexseite, sondern um eine Zahlentafel mit anderem Inhalt handelt.

Das erfindungsgemäße Verfahren kann in einer Fernsehempfangsanordnung mittels eines Steuerwerks durchgeführt werden, das den Empfang und die Verarbeitung des Datensignals (Videotextsignals) steuert. Vorzugsweise umfaßt dieses Steuerwerk einen Mikroprozessor, in dessen Befehlsspeicher die zu dem beschriebenen Verfahren gehörenden Befehle abgelegt sind.

Bevorzugt weist eine Anordnung zur Durchführung des beschriebenen Verfahrens eine Textdatenempfangsschaltung zum Dekodieren und Auswerten des Videotextsignals auf sowie ein Steuerwerk zum Steuern der Textdatenempfangsschaltung über eine Befehlsleitung derart, daß Abschnitte des Videotextsignals von der Textdatenempfangsschaltung über eine Textdatenleitung dem Steuerwerk zugeführt und darin auf dreistellige, natürliche Zahlen darstellende Signalfolgen abgesucht,diese als Kennsignale abgetrennt und als zur ausgewählten Videotextseite zugeordnet in einem Arbeitsspeicher abgespeichert werden.

Insbesondere umfaßt die Anordnung zur Durchführung des erfindungsgemäßen Verfahrens einen Textdatenspeicher zum Abspeichern des Inhalts der durch ein vorgegebenes Kennsignal identifizierten Seite des Videotextsignals, wobei das Steuerwerk derart ausgebildet ist, daß von ihm nach Abtrennen der Kennsignale die Textdatenempfangsschaltung veranlaßt wird, im laufend empfangenen Videotextsignal nach der durch die vorgegebene Seitennummer identifizierten Seite zu suchen und deren Inhalt in den Textdatenspeicher zu laden.

Ausführungsbeispiele zum erfindungsgemäßen Verfahren und zur erfindungsgemäßen Anordnung sind im nachfolgenden näher beschrieben. Dazu zeigen:
- Fig. 1: das Blockschaltbild einer Schaltungsanordnung, mit der das erfindungsgemäße Verfahren durchgeführt werden kann,
- Fig. 2: ein Beispiel einer Videotext-Übersichtsseite,
- Fig. 3: ein Ablaufdiagramm zur Erläuterung des erfindungsgemäßen Verfahrens,
- Fig. 4 und 5: Einzelheiten zum Ablaufdiagramm nach Fig. 3,
- Fig. 6: das Ablaufdiagramm eines Verfahrens zur Bearbeitung und Darstellung eines Videotextsignals, in dem das erfindungsgemäße Verfahren Verwendung findet, und
- Fig. 7: ein Ablaufdiagramm zu einer Weiterbildung der vorstehend beschriebenen Verfahren.

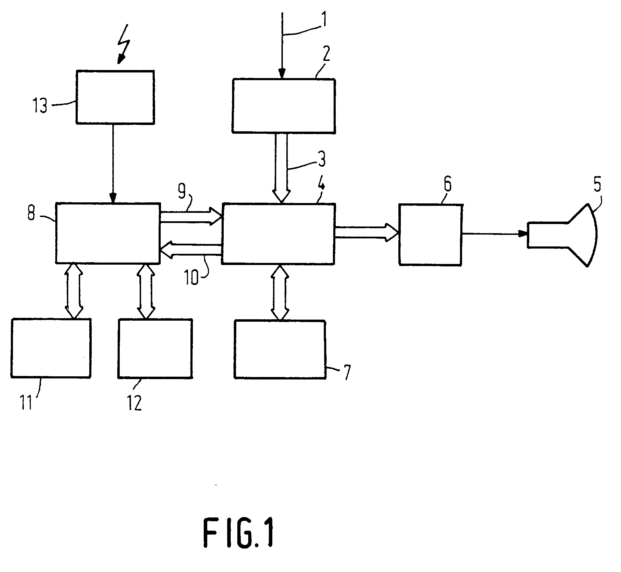

Fig. 1 zeigt das Blockschaltbild einer Fernsehempfangsanordnung, mit der ein im Fernsehsignal enthaltenes, zyklisch wiederholtes Datensignal (Videotextsignal) bearbeitet werden kann. Dieses wird zusammen mit dem Bildsignal des Fernsehsignals über eine Leitung 1 einer Videotext-Abtrennschaltung 2 zugeführt. Das hierin vom Bildsignal getrennte Videotextsignal gelangt zur Weiterverarbeitung über eine Leitung 3 in eine Textdatenempfangsschaltung 4. Diese ist ein an sich bekannter Baustein, beispielsweise vom Typ SAA 5240, in dem das Videotextsignal dekodiert und ausgewertet wird. Die Textdatenempfangsschaltung 4 erzeugt außerdem die zum Aufbau des Bildes, mit dem die Videotextseiten auf einem als Bildwiedergabeanordnung dienenden Monitor 5 dargestellt werden, benötigten Signale. Das darzustellende Videotextsignal und die zum Bildaufbau benötigten Signale werden über eine Anpassungs- und Treiberschaltung 6 von der Textdatenempfangsschaltung 4 dem Monitor 5 zugeleitet. Die Textdatenempfangsschaltung 4 ist außerdem mit einem Textdatenspeicher 7 verbunden, in dem das Videotextsignal im Umfang wenigstens einer Videotextseite, vorzugsweise aber im Umfang mehrerer Seiten, gespeichert werden kann.

Die Textdatenempfangsschaltung 4 wird von einem Steuerwerk 8 gesteuert, das vorzugsweise durch einen Mikroprozessor, z.B. vom Typ MAB 8032, gebildet wird. Der Textdatenempfangsschaltung 4 werden vom Steuerwerk 8 über eine Befehlsleitung 9 Steuerbefehle zugeführt, in Gegenrichtung überträgt sie über eine Textdatenleitung 10 das Videotextsignal. Das Steuerwerk 8 ist ferner mit einem Festwertspeicher 11 und einem Arbeitsspeicher 12 verbunden. Im Festwertspeicher sind im wesentlichen Steuerbefehle abgelegt, mit deren Hilfe das Steuerwerk 8 die Verarbeitung des Videotextsignals vornimmt, u.a. auch nach dem erfindungsgemäßen Verfahren. Der Arbeitsspeicher 12 dient u.a. zum Zwischenspeichern und zum Abspeichern von durch das Steuerwerk gewonnenen Signalen. Außerdem ist das Steuerwerk 8 mit einem Fernbedienungsempfänger 13 verbunden, über den ihm von einem Benutzer Steuerbefehle zugeführt werden, beispielsweise Nummerneingaben und andere Befehle für das Auswählen bestimmter Videotextseiten, Befehle zum Blättern in den Videotextseiten, sowie vorzugsweise die für das erfindungsgemäße Verfahren benötigten Befehle.

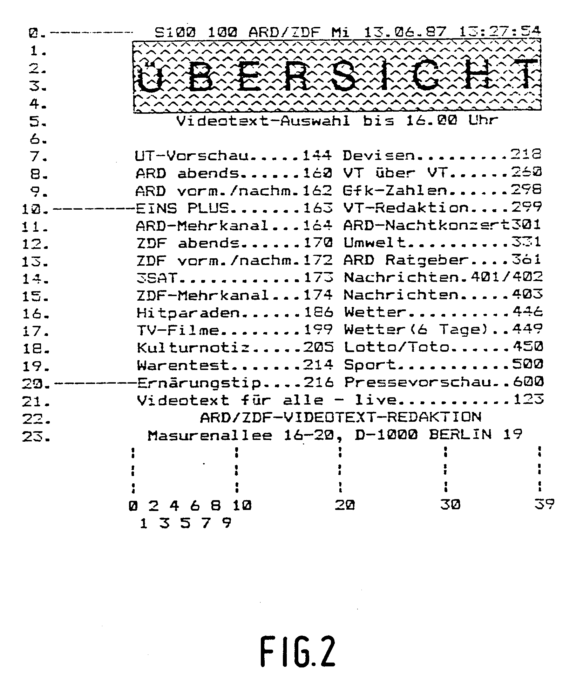

Fig. 2 zeigt die Darstellung einer Videotextseite auf einer Bildwiedergabeanordnung, beispielsweise dem Monitor 5 nach Fig. 1, anhand einer Videotext-Übersichtsseite. Sie umfaßt 24 Zeilen, die am linken Bildrand von 0 bis 23 durchnumeriert sind, sowie in jeder Zeile 40 Zeichen, die am unteren Bildrand von 0 bis 39 durchnumeriert wurden. Die Numerierungen an den Bildrändern sind im Videotextsignal nicht enthalten und erscheinen auch nicht auf dem Monitor, sondern sind lediglich zur besseren Erläuterung der dargestellten Videotextseite hinzugefügt worden.

In der dargestellten Videotextseite ist die Zeile 0 als Videotext-Kopfzeile ausgeführt, in der neben anderen Kennungen die Seitennummer sowie Datum und Uhrzeit erscheinen. Die Zeilen 1 bis 23 bilden dann den zur Durchführung des erfindungsgemäßen Verfahrens herangezogenen Inhalt der Videotextseite.

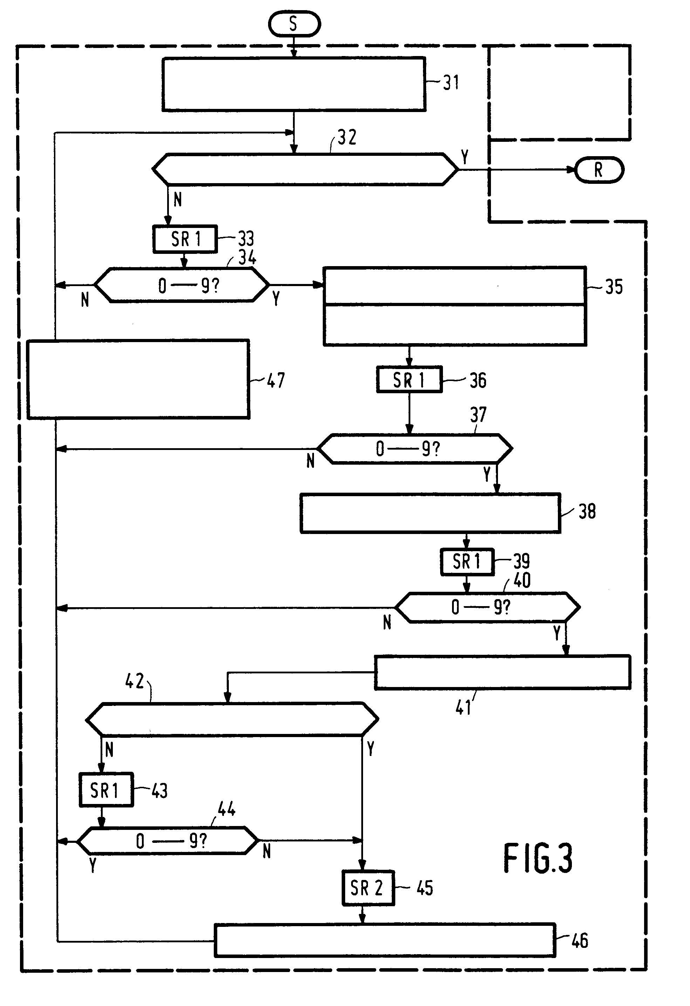

Fig. 3 zeigt das Ablaufdiagramm eines Beispiels eines erfindungsgemäßen Verfahrens zum Aufbereiten von Kennsignalen im Videotextsignal. Die zugehörigen Verfahrensschritte werden ausgehend von der Anfangsmarke S durchgeführt. Im ersten Schritt 31 wird dabei die Anzahl der auf der zu durchsuchenden Videotextseite gefundenen, eine Videotext-Seitennummer darstellenden Kennsignale auf 0 gesetzt. Außerdem wird ein interner, nicht dargestellter Zeiger, der nacheinander alle Zeichen auf der Videotextseite anfährt und durch den für das Steuerwerk 8 die das angefahrene Zeichen darstellende Signalfolge zur Bearbeitung bereitgestellt wird, auf den Anfang der Videotextseite gesetzt. Dieser Zeiger ist auch als Zeichenposition bezeichnet. Da die Videotext-Kopfzeile in keiner Videotextseite Signale enthält, die für die Durchführung des erfindungsgemäßen Verfahrens benötigt werden, wird als anfängliche Zeichenposition das Zeichen 0 der Zeile 1 angefahren.

Im nächsten Schritt 32 wird geprüft, ob die Zeichenposition bereits am Ende der zu untersuchenden Videotextseite liegt. Ist dies der Fall, wird die Suche nach Kennsignalen beendet, in Fig. 3 dargestellt durch die Endmarke R.

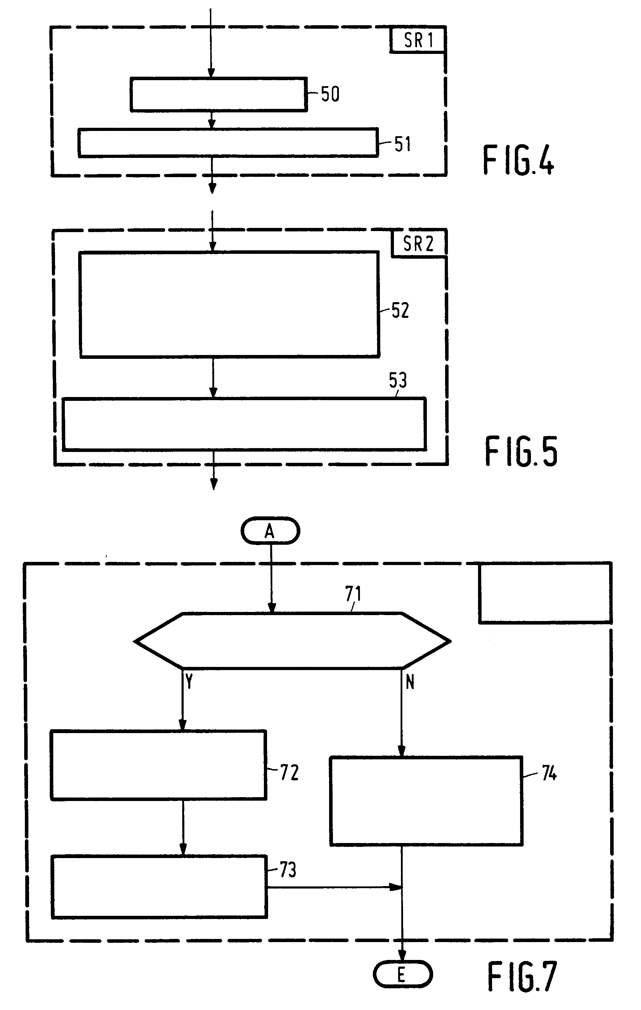

Für den Fall, daß die Zeichenposition noch nicht am Seitenende angelangt ist, wird in einem Schritt 33 das durch die Zeichenposition indizierte Zeichen bzw. die dieses Zeichen darstellende Signalfolge dem Videotextsignal entnommen und die Zeichenposition um 1 erhöht, d.h. der interne Zeiger auf das nächste Zeichen auf der Videotextseite gesetzt. Diese mit SR1 bezeichnete Folge von Verfahrensschritten ist detailliert in Fig. 4 dargestellt. Sie enthält einen Schritt 50 zum Einlesen des Zeichens und einen Schritt 51, in dem die Zeichenposition um 1 erhöht wird. Das eingelesene Zeichen bzw. die dieses darstellende Signalfolge wird nun im Schritt 34 daraufhin überprüft, ob eine Ziffer im Wertebereich von 1 bis 8 vorliegt. Ist dies nicht der Fall, wird im Verfahrensablauf sofort zur Überprüfung, ob mit der Zeichenposition bereits das Seitenende erreicht ist, (Schritt 32) zurückgesprungen, und bei negativem Ergebnis dieser Prüfung das nächste Zeichen eingelesen, d.h. werden erneut die Verfahrensschritte 33 abgearbeitet.

Wurde dagegen eine Ziffer im Wertebereich von 1 bis 8 gefunden, wird diese sowie die zugehörige Zeichenposition im Schritt 35 zwischengespeichert und danach mit einem Verfahrensschritt 36, der der Folge SR1 entspricht, das nachfolgende Zeichen eingelesen. Dieses wird im Schritt 37 daraufhin überprüft, ob es eine Ziffer im Wertebereich von 0 bis 9 bildet. Verläuft diese Prüfung positiv, wird auch dieses Zeichen im Schritt 38 zwischengespeichert und für das nächste Zeichen in den Schritten 39, 40, 41 noch einmal dieselbe Prüfung durchgeführt. Dabei gleicht der Schritt 39 der Folge SR1, der Schritt 40 dem Schritt 37 und der Schritt 41 dem Schritt 38. Verläuft dagegen eine der beiden letztgenannten Prüfungen negativ, werden alle zwischengespeicherten Zeichen und die zwischengespeicherte Zeichenposition des ersten als Ziffer erkannten Zeichens im Schritt 47 wieder gelöscht und unter den nachfolgenden Zeichen der untersuchten Videotextseite erneut nach einer Ziffer von 1 bis 8 gesucht. Verlaufen dagegen alle drei Prüfungen positiv, bedeutet dies, daß im Inhalt der Videotextseite eine Ziffernfolge im Bereich von 100 bis 899 gefunden wurde.

Zum Abschluß und zur Vervollständigung der beschriebenen Schritte muß weiterhin noch geprüft werden, ob das an die als Ziffernfolge im Wertebereich von 100 bis 899 identifizierte Zeichenfolge sich anschließende Zeichen nicht eine weitere Ziffer ist, da auch dieser Fall das Vorliegen einer Videotext-Seitenzahl ausschließt. Daher wird zunächst im Schritt 42 die Zeichenposition abgefragt, ob mit ihr ein Zeilenende auf der Videotextseite erreicht ist. Diese Abfrage dient der Beschleunigung des Verfahrens, da die meisten Seitenzahlen im Inhalt einer Videotextseite stets am Zeilenende angeordnet sind, vgl. dazu Fig. 2. Dabei ist zu berücksichtigen, daß die in Fig. 2 gezeigte Übersichtsseite insofern eine Ausnahme bildet, als sie zweispaltig aufgebaut ist, so daß hier auch in der Mitte der Zeilen Seitennummern auftreten. Nur in solchen Fällen wird aber beim Verfahren nach Fig. 3 zum Abschluß des Suchvorganges nach einer dreistelligen Zahl noch einmal der Verfahrensschritt SR1 (Schritt 43) durchgeführt und das dabei gewonnene Zeichen daraufhin überprüft, ob es eine Ziffer im Wertebereich von 0 bis 9 darstellt (Schritt 44). Ist dies der Fall, wurde insgesamt eine zumindest vierstellige Zahl gefunden, die gemäß der Norm bezüglich der Videotext-Seitennummern nicht eine solche darstellen kann. Wird dagegen ein beliebiges anderes Zeichen erkannt, liegt eine Videotext-Seitennummer vor. Diese wird in einem mit SR2 bezeichneten Verfahrensschritt 45, der in Fig. 5 detailliert dargestellt ist, aus den drei zwischengespeicherten Zeichen zusammengesetzt und zusammen mit der zwischengespeicherten Zeichenposition als identifiziertes Kennsignal mit zugehöriger identifizierter Zeichenposition zugeordnet zu der gerade dargestellten Videotextseite abgespeichert. Dies erfolgt bevorzugt im Arbeitsspeicher 12. Außerdem wird die Anzahl der auf der untersuchten Videotextseite gefundenen Seitennummern im Schritt 46 um 1 erhöht, d.h. die Identifizierung einer Seitennummer zugeordnet zur untersuchten Videotextseite vermerkt. Abschließend werden auch jetzt wieder die Zeichen und die Zeichenposition aus der Zwischenspeicherung im Schritt 47 gelöscht, um diese für die Suche der nächsten Zahl vorzubereiten. Das Verfahren setzt sich dann mit der Prüfung, ob die Zeichenposition bereits das Seitenende erreicht hat (Schritt 32), fort.

Der Verfahrensschritt SR2 nach Fig. 5 (Schritt 45 in Fig. 3) enthält einen Schritt 52 zum Zusammenfassen der zwischengespeicherten Zeichen zu einer dreistelligen Seitennummer und zum Abspeichern dieser Seitennummer. In einem anschließenden Schritt 53 wird außerdem die zwischengespeicherte Zeichenposition abgespeichert.

Beim Durchsuchen der in Fig. 2 dargestellten Videotextseite gemäß dem Verfahren nach dem Ablaufplan der Fig. 3 würden zunächst die Zeichen der Zeilen 1 bis 4 sowie der Zeile 5 bis einschließlich des 26. Zeichens als nicht eine Ziffer im Wertebereich von 1 bis 8 bildende Zeichen erkannt und würde das Verfahren somit in der ersten Schleife (Schritte 32, 33, 34) umlaufend abgearbeitet. Das Zeichen 27 der Zeile 5 fällt als erstes in den abgefragten Wertebereich und wird samt seiner Zeichenposition zwischengespeichert. Auch das nachfolgende Zeichen - die Ziffer 6 - erfüllt die nächste Prüfbedingung und wird ebenfalls zwischengespeichert. Als drittes Zeichen wird dann aber von Platz 29 in Zeile 5 ein Punkt eingelesen, der dazu führt, daß die bisher zwischengespeicherten Zeichen und die Zeichenposition gelöscht und erneut mit der Suche nach einer Ziffer im Wertebereich von 1 bis 8 begonnen wird. Da die beiden Nullen auf Platz 30 und 31 der Zeile 5 diese Bedingung nicht erfüllen, wird erst wieder die Ziffer 1 in der Zeile 7 auf Platz 17 erkannt. Die mit dieser Ziffer eingeleitete Seitennummer 144 erfüllt als erste auf dieser Videotextseite alle Bedingungen für die Identifizierung als abzuspeicherndes Kennsignal, da das ihr folgende Zeichen ein Zwischenraum ist.

Entsprechend wird am Ende der Zeile 7 die Seitennummer 218 als solche erkannt und ohne Einlesen eines nachfolgenden Zeichens abgespeichert, da hier die Zeichenposition das Zeilenende erreicht hat.

In gleicher Weise werden auch alle anderen Seitennummern der dargestellten Videotextseite einschließlich der durch einen Schrägstrich in Zeile 14 voneinander getrennten Seitennummern 401 und 402 erkannt und abgespeichert. Dagegen erfüllen die Zeichenfolgen "3SAT" in Zeile 14 sowie die Ziffernfolgen "16-20", "1000" sowie "19" nicht alle Prüfbedingungen und stören daher den Verfahrensablauf nicht.

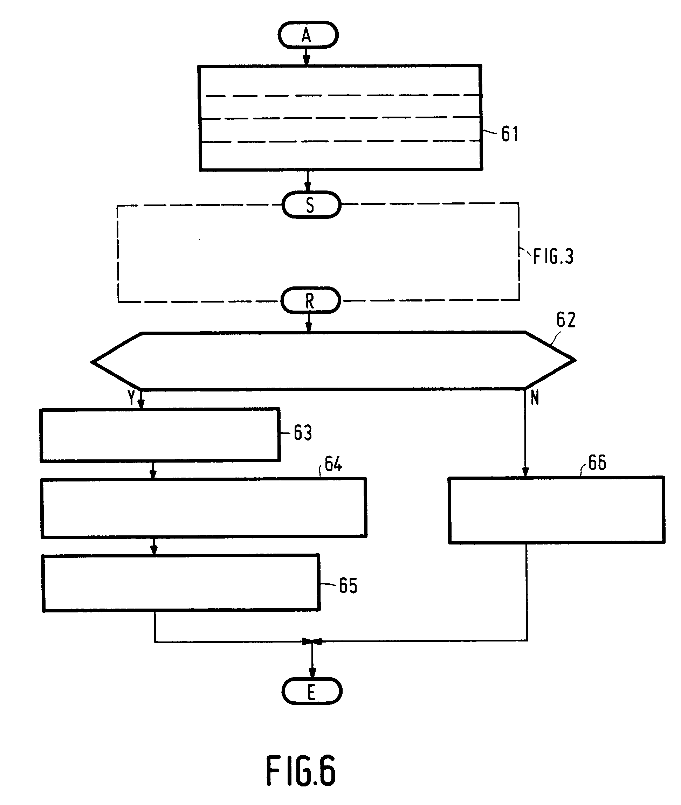

Fig. 6 zeigt ein Beispiel für einen Verfahrensablauf, in den das Verfahren gemäß Fig. 3 eingefügt ist. Beginnend im Ablaufdiagramm bei der Anfangsmarke A wird dabei in einem Schritt 61 in an sich für die Darstellung des Videotextsignals bekannter Weise eine Videotextseite mit einer vorgegebenen Seitennummer ausgewählt. Dieses Auswählen kann durch Eingabe der Nummern über eine Nummerntastatur erfolgen. Wenn die die Seitennummer darstellende Signalfolge jedoch bereits im Arbeitsspeicher 12 gespeichert ist, kann sie durch vereinfachten Aufruf zum Auswählen der zugehörigen Videotextseite herangezogen werden. Außerdem kann der Befehl zum Auswählen der Seite auch ohne besondere Befehlseingabe des Benutzers automatisch durch das Steuerwerk ausgelöst werden. In jedem Fall sucht die Textdatenempfangsschaltung 4 im laufend empfangenen (zyklisch wiederholten) Videotextsignal nach der durch die vorgegebene Seitennummer identifizierten Seite und lädt deren Inhalt in den Textdatenspeicher 7, und zwar in einen als Seitenspeicher bezeichneten Speicherbereich innerhalb des Textdatenspeichers. Anschließend wird der Inhalt der soeben geladenen Videotextseite selbsttätig durch das Steuerwerk 8 über die Textdatenempfangsschaltung 4 und die Textdatenleitung 10 gemäß dem Verfahren nach Fig. 3 nach dreistelligen, natürlichen Zahlen durchsucht, wobei die entsprechenden Einlesebefehle innerhalb des Verfahrensschritts SR1 über die Befehlsleitung 9 gesendet werden.

Wenn die Videotextseite vollständig durchsucht ist, wird beim Verfahrensablauf nach Fig. 6 eine Abfrage 62 angeschlossen, ob die Anzahl der gefundenen Seitennummern einen vorgegebenen Grenzwert überschreitet. Ist dies der Fall, wird die durchsuchte Videotextseite in einem Schritt 63 als Übersichts bzw. Indexseite angesprochen und ihre Seitennummer mit einer entsprechenden Kennung versehen gespeichert. Der Grenzwert ist dazu gemäß der Häufigkeit des Auftretens von Seitennummern in Übersichtsseiten und in den übrigen Videotextseiten gewählt. So kann eine Videotextseite beispielsweise als Indexseite angesprochen werden, wenn in ihr mehr als zwei Seitennummern gefunden werden. Um für die nun vom Benutzer erwünschte Auswahl von (weiteren) Videotextseiten anhand der Hinweise auf der dargestellten Übersichtsseite eine einfache Handhabung zu bieten, wird in Fortsetzung des bisherigen Verfahrens in einem Schritt 64 die erste zur erkannten Indexseite abgespeicherte Zeichenposition aufgerufen und in einem Schritt 65 eine Markierung auf dem Monitor 5 zugeordnet zu der Seitennummer in der ersten Zeichenposition dargestellt. Wird dagegen der Grenzwert von der Anzahl der gefundenen Seitennummern nicht erreicht, erscheint mittels eines Schrittes 66 auf dem Monitor eine Anzeige "keine Indexseite".

In Fortsetzung des in Fig. 6 dargestellten Verfahrensabschnittes - im Ablaufplan im Anschluß an die Endmarke E - können sich nun weitere Verfahrensschritte anschließen, mit denen der Benutzer die Markierung auf eine gewünschte Seitennummer stellen und die zugehörige Videotextseite auswählen kann. Daran könnte sich beispielsweise ein erneuter Durchlauf durch die Verfahrensschritte gemäß Fig. 6 anschließen, diesmal für die neu ausgewählte Videotextseite.

Fig. 7 zeigt als weiteres Beispiel zur Ausgestaltung des erfindungsgemäßen Verfahrens eine Folge von Verfahrensschritten zum Aufruf bereits erkannter Indexseiten, der für ein sogenanntes Rückblättern von einer Videotextseite mit einer Einzelinformation auf eine Indexseite eingesetzt wird. Die hier dargestellten Verfahrensschritte erlauben ein Auswählen der bereits erkannten Indexseiten in einem Bedienungsvorgang, der ebenfalls eine Eingabe von Seitennummern über eine Nummerntastatur umgeht. Dazu wird zunächst eine Abfrage 71 vorgenommen, ob bereits Indexseiten erkannt und ihre Nummern mit der entsprechenden Kennung im Arbeitsspeicher 12 abgelegt wurden. Ist dies der Fall, wird die in der Reihenfolge der Abspeicherung nächste Indexseitennummer im Schritt 72 - beispielsweise ausgehend von einer während des Blätterns erreichten Indexseitennummer - aus dem Arbeitsspeicher 12 ausgelesen und über das Steuerwerk 8 und die Befehlsleitung 9 in der Textdatenempfangsschaltung 4 zum Auswählen der zugehörigen Indexseite aus dem Videotextsignal bereitgestellt. Trifft der zu dieser Indexseite gehörige Abschnitt des Videotextsignals über die Videotext-Abtrennschaltung 2 und die Leitung 3 ein, wird er mittels eines Schrittes 73 im Textdatenspeicher 7 gespeichert und auf dem Monitor 5 dargestellt. Bei hinreichend großem Textdatenspeicher 7 ist es auch möglich, daß die ausgewählte Indexseite dort bereits abgespeichert ist, gegebenenfalls für die gesamte Dauer des Blätterns in den Videotextseiten. Sie läßt sich dann ohne weitere Verzögerung aus dem Textdatenspeicher abrufen und darstellen.

Wurde dagegen bisher keine Videotextseite als Indexseite erkannt und gekennzeichnet, wird vom Steuerwerk 8 anstelle der vorbeschriebenen Verfahrensschritte lediglich im Schritt 74 eine Anzeige "keine Indexseite bekannt" auf dem Monitor zur Darstellung gebracht.

## Patentansprüche

1. Verfahren zum Aufbereiten von Kennsignalen, die in einem innerhalb eines Fernsehsignals zyklisch wiederholten Datensignal in Form eines Videotextsignals enthalten sind, welches wiedergabeseitig in Form einzelner stehender Fernsehbilder als Videotextseiten darstellbar ist,
dadurch gekennzeichnet, daß wiedergabseitig ein wenigstens einen Teil des Inhalts einer ausgewählten Videotextseite bildender Abschnitt des Videotextsignals auf dreistellige, natürliche Zahlen darstellende Signalfolgen abgesucht wird, diese als Kennsignale abgetrennt und als zur ausgewählten Videotextseite zugeordnet abgespeichert werden.

2. Verfahren nach Anspruch 1,
dadurch gekennzeichnet, daß der Inhalt der ausgewählten Videotextseite zeichenweise danach abgesucht wird, ob eine eine Ziffer darstellende Signalfolge vorliegt, und daß eine Signalfolge als Kennsignal abgetrennt wird, wenn sie unmittelbar aufeinanderfolgend drei eine Ziffer darstellende Signalfolgen umfaßt und die unmittelbar vorausgehenden und sich anschließenden Signalfolgen keine Ziffer darstellen.

3. Verfahren nach Anspruch 1 oder 2,
dadurch gekennzeichnet, daß als Kennsignale nur Signalfolgen abgespeichert werden, die eine natürliche Zahl im Wertebereich von 100 bis 899 darstellen.

4. Verfahren nach Anspruch 2 und 3,
dadurch gekennzeichnet, daß der Inhalt der ausgewählten Videotextseite zeichenweise auf Signalfolgen abgesucht wird, die eine Ziffer im Wertebereich von 1 bis 8 darstellen, und daß bei Auffinden einer solchen Signalfolge die unmittelbar anschließenden Signalfolgen darauf geprüft werden, ob sie zwei Ziffern im Wertebereich von 0 bis 9, gefolgt von einem anderen Zeichen, darstellen.

5. Verfahren nach Anspruch 1, 2, 3 oder 4,
dadurch gekennzeichnet, daß bei Auftreten einer vorbestimmten Signalfolge im Anschluß an ein Kennsignal ein bestimmter, sich an die vorbestimmte Signalfolge anschließender Abschnitt von Signalen weiteren Untersuchungsschritten zugeleitet wird.

6. Verfahren nach einem oder mehreren der vorhergehenden Ansprüche,
dadurch gekennzeichnet, daß bei wiedergabeseitigem Auswählen einer Videotextseite zur Darstellung auf einer Bildwiedergabeanordnung alle Kennsignale mit zugehörigen Positionen auf der Videotextseite abgespeichert werden und eine Markierung auf der Bildwiedergabeanordnung dargestellt wird, die gemäß den abgespeicherten Positionen den einzelnen durch die Kennsignale dargestellten Zahlen wahlweise zuordbar ist.

7. Verfahren nach Anspruch 6,
dadurch gekennzeichnet, daß die Markierung nach dem Auswählen der Videotextseite dem ersten dazu abgespeicherten Kennsignal zugeordnet wird und schrittweise den übrigen Kennsignalen zuordbar ist.

8. Verfahren nach einem oder mehreren der Ansprüche 1 bis 5,
dadurch gekennzeichnet, daß bei wiedergabeseitigem Auswählen einer Videotextseite zur Darstellung auf einer Bildwiedergabeanordnung das Absuchen nach Auffinden jeweils eines Kennsignals unterbrochen und eine Markierung zugeordnet zu der durch das Kennsignal dargestellten Zahl auf der Bildwiedergabeanordnung dargestellt wird.

9. Verfahren nach einem oder mehreren der vorhergehenden Ansprüche,
dadurch gekennzeichnet, daß wenigstens ein abgespeichertes Kennsignal als Adresse zum Auswählen einer (weiteren) Videotextseite aufgerufen wird.

10. Verfahren nach einem oder mehreren der vorhergehenden Ansprüche,
dadurch gekennzeichnet, daß beim Über- bzw. Unterschreiten einer vorgebbaren Mindestzahl und/oder Höchstzahl von Kennsignalen in einer Videotextseite zu dieser eine Kennung abgespeichert wird, die einem vereinfachten Auswählen dieser Videotextseite dient.

11. Verfahren nach Anspruch 10,
dadurch gekennzeichnet, daß die abgespeicherten Kennungen auf der Bildwiedergabeanordnung dargestellt werden.

12. Anordnung zur Durchführung des Verfahrens nach einem der Ansprüche 1 bis 11,
gekennzeichnet durch eine Textdatenempfangsschaltung (4) zum Dekodieren und Auswerten des Videotextsignals sowie ein Steuerwerk (8) zum Steuern der Textdatenempfangsschaltung (4) über eine Befehlsleitung (9) derart, daß Abschnitte des Videotextsignals von der Textdatenempfangsschaltung (4) über eine Textdatenleitung (10) dem Steuerwerk (8) zugeführt und darin auf dreistellige, natürliche Zahlen darstellende Signalfolgen abgesucht diese als Kennsignale abgetrennt und al zur augewählten Videotextseite zugeordnet in einem Arbeitsspeicher (12) abgespeichert werden.

13. Anordnung nach Anspruch 12,
gekennzeichnet durch einen Textdatenspeicher (7) zum Abspeichern des Inhalts der durch ein vorgegebenes Kennsignal identifizierten Seite des Videotextsignals, wobei das Steuerwerk (8) derart ausgebildet ist, daß von ihm nach Abtrennen der Kennsignale die Textdatenempfangsschaltung (4) veranlaßt wird, im laufend empfangenen Videotextsignal nach der durch das vorgegebene Kennsignal identifizierten Seite zu suchen und deren Inhalt in den Textdatenspeicher (7) zu laden.

## Claims

1. A method of processing identification signals comprised in a data signal in the form of a teletext signal which is cyclically repeated within a television signal and can be displayed at the receiver end as teletext pages in the form of single still television pictures, characterized in that, at the receiver end, a part of the teletext signal constituting at least a part of the contents of a selected teletext page is searched for signal sequences representing three-digit, natural numbers, and in that said signal sequences are separated as identification signals and stored as signals assigned to the selected teletext page.

2. A method as claimed in Claim 1, characterized in that the contents of the selected teletext page are searched character by character for the presence of a signal sequence representing a digit and in that a signal sequence is separated as an identification signal if it comprises three successive signal sequences representing a digit and if the signal sequences directly preceding and following this sequence do not represent a digit.

3. A method as claimed in Claim 1 or 2, characterized in that only signal sequences representing a natural number in the range between 100 and 899 are stored as identification signals.

4. A method as claimed in Claims 2 and 3, characterized in that the contents of the selected teletext page are searched character by character for the presence of signal sequences representing a digit in the range between 1 and 8 and in that in the case of such a signal sequence being found the directly following signal sequences are checked on whether they represent two digits in the range between 0 and 9, followed by another character.

5. A method as claimed in Claim 1, 2, 3 or 4, characterized in that in the case of occurrence of a predetermined signal sequence following an identification signal, a given part of the signals following the predetermined signal sequence is subjected to further searching steps.

6. A method as claimed in any one of the preceding Claims, characterized in that in the case of selecting a teletext page at the receiver end for displaying it on a picture display device all identification signals with the associated positions on the teletext page are stored and in that a cursor is displayed on the picture display device, which cursor can be optionally assigned in accordance with the stored positions to the single numbers represented by the identification signals.

7. A method as claimed in Claim 6, characterized in that the cursor is assigned to the first stored identification signal after selection of the teletext page and can be stepwise assigned to the other identification signals.

8. A method as claimed in any one of the preceding Claims 1 to 5, characterized in that in the case of selecting a teletext page at the receiver end for displaying it on a picture display device the search is interrupted each time an identification signal is found and a cursor is assigned to the number represented by said identification signal and displayed on the picture display device.

9. A method as claimed in any one of the preceding Claims, characterized in that at least a stored identification signal is addressed to select a (further) teletext page.

10. A method as claimed in any one of the preceding Claims, characterized in that an identification is stored when identification signals in a teletext page exceed or become below a predetermined minimum number and/or maximum number, which identification is used for a simplified selection of said teletext page.

11. A method as claimed in Claim 10, characterized in that the stored identifications are displayed on the picture display device.

12. An arrangement for carrying out the method as claimed in any one of Claims 1 to 11, characterized by a text data reception circuit (4) for decoding and evaluating the teletext signal, a control unit (8) for controlling the text data reception circuit (4) *via* a command line (9) in such a way that parts of the teletext signal are applied by the text data reception circuit (4) *via* a text data line (10) to the control unit (8) and are searched therein for the presence of signal sequences representing three-digit natural numbers, which sequences are separated as identification signals and are stored in a working memory (12) as signals assigned to the selected teletext page.

13. An arrangement as claimed in Claim 12, characterized by a text data memory (7) for storing the contents of the page of the teletext signal identified by a given identification signal, the control unit (8) being formed in such a manner that, after separation of the identification signals, it commands the text data reception circuit (4) to search for the page identified by the given identification signal in the permanently received teletext signal and to charge the text data memory (7) with the contents of said page.

## Revendications

1. Procédé de traitement de signaux d'identification, qui sont contenus dans un signal de données ayant la forme d'un signal de vidéotex répété de manière cyclique à l'intérieur d'un signal de télévision, ce signal de données pouvant être affiché côté affichage sous la forme d'images de télévision fixes individuelles en tant que pages de vidéotex, caractérisé en ce que, côté affichage, on analyse une section du signal de vidéotex formant au moins une partie du contenu d'une page de vidéotex sélectionnée pour détecter les séquences de signaux représentant des nombres entiers naturels à trois positions, on les sépare sous la forme de signaux d'identification et on les mémorise comme étant affectés à la page de vidéotex sélectionnée.

2. Procédé selon la revendication 1, caractérisé en ce que le contenu de la page de vidéotex sélectionnée est analysé ensuite, caractère par caractère, pour savoir si une séquence de signaux représentant un chiffre est présente et en ce qu'une séquence de signaux est séparée en tant que signal d'identification lorsqu'elle contient trois séquences de signaux représentant un chiffre et se suivant directement et que les séquences de signaux immédiatement précédente et suivante ne représentent pas de chiffre.

3. Procédé selon la revendication 1 ou 2, caractérisé en ce que l'on mémorise comme signaux d'identification uniquement des séquences de signaux qui représentent un nombre entier naturel dans le domaine des valeurs de 100 à 899.

4. Procédé selon les revendications 2 et 3, caractérisé en ce que le contenu de la page de vidéotex sélectionnée est analysé, caractère par caractère, pour détecter des séquences de signaux, qui représentent un chiffre dans le domaine de 1 à 8, et en ce que, lorsqu'une telle séquence de signaux est trouvée, les séquences de signaux qui la suivent directement sont contrôlées pour savoir si elles représentent deux chiffres dans le domaine des valeurs de 0 à 9, suivis d'un autre caractère.

5. Procédé selon les revendications 1, 2, 3 ou 4, caractérisé en ce que, lorsqu'apparaît une séquence de signaux prédéterminée qui fait suite à un signal d'identification, une section déterminée de signaux qui suit la séquence de signaux prédéterminée est envoyée à d'autres étapes de contrôle.

6. Procédé selon une ou plusieurs des revendications précédentes, caractérisé en ce que, lorsque l'on sélectionne côté affichage une page de vidéotex à afficher sur un dispositif d'affichage d'image, tous les signaux d'identification sont mémorisés avec les positions connexes sur la page de vidéotex et sur le dispositif d'affichage d'image est affichée une marque qui, selon les positions mémorisées, peut être affectée au choix aux nombres individuels représentés par les signaux d'identification.

7. Procédé selon la revendication 6, caractérisé en ce que la marque est affectée, après la sélection de la page de vidéotex, au premier signal d'identification mémorisé à cet effet et peut être affectée progressivement aux autres signaux d'identification.

8. Procédé selon une ou plusieurs des revendications 1 à 5, caractérisé en ce que, lorsqu'on sélectionne, côté affichage une page de vidéotex à afficher sur un dispositif d'affichage d'image, on interrompt la recherche après avoir trouvé, respectivement, un signal d'identification, et on affiche sur le dispositif d'affichage d'image une marque affectée au nombre représenté par le signal d'identification.

9. Procédé selon une ou plusieurs des revendications précédentes, caractérisé en ce qu'au moins un signal d'identification mémorisé est appelé en tant qu'adresse pour sélectionner une (autre) page de vidéotex.

10. Procédé selon une ou plusieurs des revendications précédentes, caractérisé en ce que, lorsque l'on dépasse par excès ou par défaut un nombre minimum et/ou un nombre maximum prédéterminable de signaux d'identification dans une page de vidéotex, on mémorise pour ces signaux un indicatif qui permet une sélection plus simple de cette page de vidéotex.

11. Procédé selon la revendication 10, caractérisé en ce que les indicatifs mémorisés sont affichés sur le dispositif d'affichage d'image.

12. Montage permettant de réaliser le procédé selon l'une quelconque des revendications 1 à 11, caractérisé par un circuit de réception de données de texte (4) pour décoder et évaluer le signal de vidéotex ainsi qu'une unité de commande (8) pour commander le circuit de réception des données de texte (4) via une ligne d'instructions (9) de telle sorte que des sections du signal de vidéotex soient envoyées par le circuit de réception de données de texte (4) à l'unité de commande (8) via une ligne de données de texte (10), que l'on y analyse les séquences de signaux représentant des nombres entiers naturels à trois positions, qu'on les sépare sous la forme de signaux d'identification et qu'on les mémorise affectés à la page de vidéotex sélectionnée dans une mémoire de travail (12).

13. Montage selon la revendication 12, caractérisé par une mémoire de données de texte (7) pour mémoriser le contenu de la page du signal de vidéotex fixée par un signal d'identification prédéterminé, l'unité de commande (8) étant conçue en sorte qu'elle autorise, après séparation des signaux d'identification, le circuit de réception de données de texte (4) à rechercher dans le signal de vidéotex reçu en continu la page identifiée par le numéro prédéterminé et à charger son contenu dans la mémoire de données de texte (7).
